# EUROPÄISCHE PATENTSCHRIFT

(11) **EP 3 974 401 B1**
(45) Veröffentlichungstag und Bekanntmachung des Hinweises auf die Patenterteilung: **07.06.2023**
(21) Anmeldenummer: 20198750.0
(22) Anmeldetag: 28.09.2020
(51) Int. Cl.: C04B 28/06, B01D 39/20

(54) **FILTERMATERIAL FÜR BODENFILTER ZUR PHOSPHATADSORPTION**
FILTER MATERIAL FOR SOIL FILTER FOR PHOSPHATE ADSORPTION
MATIÈRE FILTRANTE POUR FILTRES DE SOL DESTINÉS À L'ADSORPTION DE PHOSPHATE

(43) Veröffentlichungstag der Anmeldung: 30.03.2022
(73) Patentinhaber: Polyplan-Kreikenbaum Gruppe GmbH, 28217 Bremen (DE)
(72) Erfinder: BRUNS, Stefan, 27356 Rotenburg (DE)
(74) Vertreter: Erbacher, Martin

(56) Entgegenhaltungen:
- WO-A1-2008/064504
- CN-A- 107 059 546
- JP-B2- 3 559 905
- VOHLA C ET AL: "Filter materials for phosphorus removal from wastewater in treatment wetlands-A review", ECOLOGICAL ENGINEERING, ELSEVIER, AMSTERDAM, NL, Bd. 37, Nr. 1, 1. Januar 2011 (2011-01-01) , Seiten 70-89, XP027564479, ISSN: 0925-8574 [gefunden am 2009-10-17]

## Beschreibung

Die vorliegende Erfindung betrifft ein synthetisches Filtermaterial aus Split, einem oder mehreren Oxiden oder Hydroxiden von Fe, La, und/oder Al, Zement, Schnellbinder und Wasser, das als Filtermaterial für Bodenfilter zur Phosphatadsorption dienen kann, sowie das Verfahren zur Herstellung des Filtermaterials.

### Einleitung

Bodenfilter mit unterschiedlichen Filtermaterialien werden zunehmend zur Wasseraufbereitung in Seen, Flüssen und Naturbädern eingesetzt. Ziel des Einsatzes ist die dauerhafte Gewährleistung der durch den jeweiligen Nutzungsanspruch definierten Wasserqualität.

Die Reinigungsleistung von Bodenfiltern erfolgt durch verschiedene Mechanismen.

Neben einer mechanischen Filtrierung von organischen und anorganischen Substanzen, einer pH-Wert stabilisierenden Wirkung und einem biologischen Abbau von Organismen (Phytoplankton, Viren, Bakterien etc.) über den entstehenden Biofilm, sind vor allem Phosphoradsorbtionsprozesse am Filtermaterial relevant. Phosphor ist in Seen und Naturbädern zumeist der limitierende Faktor für das biologische Wachstum. Durch die Bindung von Phosphor im Filter wird dieser dem Wasser dauerhaft entzogen, wodurch die Wasserqualität nachhaltig verbessert wird.

### Stand der Technik

Während bei der Verwendung von natürlichen Filtermaterialien wie z.B. Oolith Phosphoreliminationsraten von 20-30% je Filterdurchlauf erreicht werden, so können bei der Verwendung eisenbasierter synthetischer Filtermaterialien Eliminationsraten von 50-60% erzielt werden.

Nachteilig ist an bekannten Materialien zur Phosphatadsorption in Bodenfiltern jedoch, dass diese nur begrenzt lagerfähig sind und größere Mengen kostenintensiver Adsorptionsmaterialien benötigen.

JP 3 559905 B2 offenbart ein Filtermaterial zur Adsorption von Phosphat.

### Aufgabe der Erfindung

Es ist daher die Aufgabe der vorliegenden Erfindung ein Filtermaterial bereitzustellen, das länger lagerfähig und einfacher herzustellen ist. Vor allem jedoch soll bei einer gleichzeitigen Verringerung der Menge des Adsorptionsmaterials eine gleichbleibende Adsorptionsfähigkeit für Phosphor erzielt werden bzw. es soll ein Filtermaterial mit verbesserter Adsorptionsfähigkeit bereitgestellt werden.

### Detaillierte Beschreibung der Erfindung

Die Aufgabe wird gelöst durch ein Filtermaterial, das 50 bis 90 Gew.-% Split mit einer Korngröße von 1 bis 20 mm; 1 bis 25 Gew.-% eines oder mehrerer Oxide und/oder Hydroxide von Fe, La und/oder Al; 1 bis 12 Gew.-% Zement; 0,1 bis 5 Gew.-% Schnellbinder und 1 bis 10 Gew.-% Wasser, jeweils bezogen auf das Gesamtgewicht des Filtermaterials, umfasst.

Überraschenderweise wurde gefunden, dass das erfindungsgemäße Filtermaterial eine verbesserte Phosphoradsorptionskapazität bei einer gleichzeitig verringerten Menge an Adsorptionsmaterial ermöglicht. Ferner ermöglicht die verwendete Körnung eine längere Lagerung, da ein Verklumpen erschwert wird.

### Split

Der Split kann bevorzugt mit einem Gewichtsanteil von 60-80 Gew.-%, besonders bevorzugt 70-79 Gew.-%, jeweils bezogen auf das Gesamtgewicht des Filtermaterials, vorliegen.

Der Split kann vorzugsweise ein Kalksplit oder ein Kies auf Basis von Siliciumdioxid sein. Kalksplit ist besonders bevorzugt. Der besonders bevorzugte Kalksplit weist eine besonders hohe Affinität zu Phosphor auf, wodurch die Phosphoradsorbtionskapazität des Materials zusätzlich erhöht wird.

Der Split kann bevorzugt eine Korngröße von 2 bis 8 mm, besonders bevorzugt von 2 bis 5 mm (2/5) oder von 5 bis 8 mm (5/8) aufweisen. Die Korngröße kann gemäß DIN EN 9331 bestimmt werden.

Vorzugsweise kann der Split eine Kornform SI₂₀ aufweisen.

Vorzugsweise kann der Split eine Korngrößenverteilung G_{c} 90/15 und/oder G_{c} 85/20 aufweisen. Besonders bevorzugt weist der Split eine Korngrößenverteilung mit einer Fraktion von Kornteilchen < 2 mm von weniger als 2 Gew.-% auf.

Vorzugsweise weist der Split eine Abriebfestigkeit auf, bei der die maximale Differenz nach der Zerreibeprüfung gemäß DIN EN 932-2:19999 und DIN EN 933-1:2012 für eine Körnung von 2 bis 8 mm ≤ 6 Gew.-% beträgt.

Vorzugsweise kann der Split eine Trockenrohdichte von 2 bis 3 g/cm³ aufweisen.

Vorzugsweise kann der Split eine pH-Steigerung im konstanten Durchfluss innerhalb eines geschlossenen Systems nach 20 min von höchstens 1,0 pH-Einheiten aufweisen. Für die Messung kann Leitungswasser mit einem pH-Wert von ca. 8 verwendet werden.

Vorzugsweise kann der Split eine Abwitterung von höchstens 2 Gew.-% aufweisen. Die Abwitterung kann gemäß DIN EN 932-2:1999 und DIN EN 933-1:2012 bestimmt werden.

### Oxid/Hydroxid

Die Oxide und/oder Hydroxide von Eisen (Fe), Lanthan (La) und Aluminium (Al) dienen als Bindungspartner für den Phosphor (P). Eisen kann sowohl auf der Oxidationsstufe +2 als auch +3 vorliegen. Lanthan und Aluminium liegen bevorzugt in der Oxidationsstufe +3 vor. Eisenoxid und Eisenhydroxid sind bevorzugt. Eisenoxid ist besonders bevorzugt.

Die Oxide und/oder Hydroxide können bevorzugt mit einem Gewichtsanteil von 3-20 Gew.-%, besonders bevorzugt 4-15 Gew.-%, ganz besonders bevorzugt 5-10 Gew.-%, jeweils bezogen auf das Gesamtgewicht des Filtermaterials, vorliegen.

Vorzugsweise weist das Eisenoxid einen Eisengehalt von mindestens 60 Gew.-%, bezogen auf den Trockenstoff, auf.

Vorzugsweise weist das Eisenhydroxid einen Eisengehalt von mindestens 40 Gew.-%, bezogen auf den Trockenstoff, auf.

Vorzugsweise weist das Lanthanoxid oder Lanthanhydroxid einen Lanthangehalt von mindestens 65 Gew.-%, bezogen auf den Trockenstoff, auf.

Vorzugsweise weist das Aluminiumoxid einen Aluminiumgehalt von mindestens 40 Gew.-%, bezogen auf den Trockenstoff, auf.

Vorzugsweise weist das Aluminiumhydroxid einen Aluminiumgehalt von mindestens 30 Gew.-%, bezogen auf den Trockenstoff, auf.

Vorzugsweise können die Oxide und/oder Hydroxide eine Korngrößenverteilung d50 von 20 bis 30 µm aufweisen. Insbesondere kann Eisenoxid vorzugsweise eine Korngrößenverteilung d50 von 20 bis 30 µm aufweisen. Die Korngrößenverteilung kann beispielsweise per Siebung bestimmt werden.

Besonders bevorzugt ist das Eisenoxid MethaTec DG1/L (TerraVis GmbH, Münster).

### Zement

Der Zement kann bevorzugt mit einem Gewichtsanteil von 2-10 Gew.-%, besonders bevorzugt 5-9 Gew.-%, jeweils bezogen auf das Gesamtgewicht des Filtermaterials, vorliegen.

Der Zement kann Portlandzement, bevorzugt Portlandzement des Typs CEM I oder CEM II, sein. Vorzugsweise kann der Zement die Festigkeitsklasse 42,5 R oder 32,5 R aufweisen. Zement der Festigkeitsklasse 42,5 R ist besonders bevorzugt. Eine höhere Festigkeit des Zements ermöglicht eine längere Beständigkeit des erfindungsgemäßen Filtermaterials und folglich auch eines Bodenfilters, der das erfindungsgemäße Filtermaterial enthält.

### Schnellbinder

Der Schnellbinder kann bevorzugt mit einem Gewichtsanteil von 0,2-4,0 Gew.-%, besonders bevorzugt 0,3-2,0 Gew.-%, ganz besonders bevorzugt 0,4-1,0 Gew.-%, jeweils bezogen auf das Gesamtgewicht des Filtermaterials, vorliegen.

Der Schnellbinder kann Calciumaluminat umfassen. Vorzugsweise kann der Schnellbinder eine Zusammensetzung aus Al₂O₃, CaO, SiO₂, Fe₂O₃, MgO und/oder TiO₂ umfassen. Vorzugsweise kann der Schnellbinder eine spezifische Oberfläche von mehr als 4.000 cm²/g, vorzugsweise 4.100 bis 4.600 cm²/g aufweisen. Weiterhin kann der Schnellbinder einen 500-µm-Siebrückstand von weniger als 2,5 Gew.-%, vorzugsweise von weniger als 1,0 Gew.-% aufweisen. Der Schnellbinder weist vorzugsweise eine Schüttdichte von 1100-1300 kg/m3 auf. Der Schnellbinder weist vorzugsweise eine sehr kurze Abbindezeit, eine sehr schnelle Festigkeitsentwicklung, exzellente Eigenschaften bei niedrigen Temperaturen, eine hohe Endfestigkeit und/oder eine robuste Formulierung auf.

Besonders bevorzugt ist der Schnellbinder Ternal SE (Kerneos SA, Neuilly sur Seine, Frankreich).

### Wasser

Der Gewichtsanteil von Wasser kann vorzugsweise 2 bis 8 Gew.-%, bevorzugt 3-7,5 Gew.-%, besonders bevorzugt 4-7 Gew.-%, bezogen auf das Gesamtgewicht des Filtermaterials, betragen.

### Eigenschaften des Filtermaterials

Das erfindungsgemäße Filtermaterial weißt vorzugsweise eine Phosphor-Beladungssumme nach 7 Stunden von mehr als 15 µg PO₄/g Filtermaterial, bevorzugt von mehr als 18 µg PO₄/g Filtermaterial, besonders bevorzugt von mehr als 21 µg PO₄/g Filtermaterial auf.

### Verfahren

Die vorliegende Erfindung betrifft auch ein Verfahren zum Herstellen des erfindungsgemäßen Filtermaterials. Dieses umfasst die Schritte: a) Bereitstellen eines Gemischs aus dem einen oder den mehreren Metalloxiden oder Metallhydroxiden, dem Zement und dem Schnellbinder; b) Zugeben des Gemischs aus Schritt a) zu dem Split oder Zugeben des Splits zu dem Gemisch aus Schritt a); c) Vermischen des in Schritt b) erhaltenen Gemischs; d) Zugeben von Wasser zu dem in Schritt c) erhaltenen Gemisch und anschließendes Vermischen.

Vorzugsweise wird in Schritt b) das Gemisch aus Schritt a) zu dem Split gegeben.

Das vermischen in den Schritten c) und/oder d) kann vorzugsweise in einem Zwangsmischer erfolgen.

Das abschließende Vermischen gemäß Schritt d) erfolgt vorzugsweise innerhalb von 1-10 Minuten, bevorzugt 1-5 Minuten, besonders bevorzugt 1-3 Minuten.

Die Wassermenge gemäß Schritt d) wird vorzugsweise an die Ausgangsfeuchtigkeit des Splits angepasst. Besonders bevorzugt wird hierbei zunächst eine Wassermenge von 4,5 Gew.-%, bezogen auf das Gesamtgewicht der Zusammensetzung, hinzugegeben. Die Zugabe wird vorzugsweise gestoppt, sobald das Gemisch gebunden ist. Der Wassergehalt beträgt vorzugsweise 7,5 Gew.-% oder weniger, da dies für die Frostbeständigkeit des Materials vorteilhaft ist.

Das erfindungsgemäße Filtermaterial eignet sich zur Adsorption von Phosphat, z.B. zur Verwendung in Phosphatadsorptionsschächten.

Die vorliegende Erfindung betrifft auch einen Bodenfilter, der das erfindungsgemäße Filtermaterial umfasst, und die Verwendung des erfindungsgemäßen Bodenfilters zur Adsorption von Phosphat.

Insbesondere eignet sich der erfindungsgemäße Bodenfilter für die Verwendung in Naturbädern oder Badeseen.

Sämtliche Kombinationen von bevorzugten Bereichen oder von Ausführungsformen sind besonders bevorzugt.

Weitere Merkmale und Vorteile der Erfindung ergeben sich aus der nachfolgenden detaillierten Beschreibung von Ausführungsbeispielen.

### Ausführungsbeispiele

### Phosphatadsorptionstest

### Methode

Zur Bestimmung der Phosphatabsorption wurden 10 g des gewaschenen und getrockneten Ausgangsmaterial (50 °C im Trockenschrank) eingewogen und mit 30 ml Phosphatlösung (c (PO₄) = 2,0 mg/L) versetzt. Die Probe wurde für 1 h in der Lösung belassen und zwischendurch geschüttelt.

Anschließend wurde die Lösung zur Konzentrationsbestimmung von Phosphat abgenommen. Um eine Aussage über den Belegungsgrad der Oberfläche machen zu können, wurde das Material in weiteren Schritten mit 30 ml der Ausgangslösung, geschüttelt und die Konzentrationsabnahme in der Lösung bestimmt. Die Messung der Phosphatkonzentration erfolgte photometrisch nach DIN EN ISO 6878 bei 880 nm nach SOP 8.3.

### Getestetes Material

### Versuchsbeispiel 1 (B465)

Die Zusammensetzung von Versuchsbeispiel 1 (B465) ist in Tabelle 1 angegeben.

**Tabelle 1: Zusammensetzung von Versuchsbeispiel 1 (B465)**

| Material | Gew.-% |
|---|---|
| Split 5/8^{a} | 77,78 |
| Eisenoxid^{b} | 5,56 |
| Zement^{c} | 8,33 |
| Schnellbinder^{d} | 0,83 |
| Wasser | 7,5 |
| Gesamt: | 100 |

| | |
|---|---|
| ^{a} Kalkstein 10145 der Firma Hermann Wegener GmbH & Co. KG, Hannover ^{b} MethaTec^{®} Eisenoxid DG1L der Firma TerraVis GmbH, Münster ^{c} Festigkeitsklasse CEM II 42,5, Heidelberg Cement AG, Hannover ^{d} Ternal SE der Firma, Kerneos SA, Neuilly sur Seine, Frankreich | |

### Herstellung

50 kg Eisenoxid, 75 kg Zement und 7,5 kg Schnellbinder wurden gemischt Anschließend wurde das Gemisch zu 700 kg Split 5/8 hinzugegeben und in einem Zwangsmischer vermischt. Abschließend wurden 67,5 kg Wasser hinzugegeben und erneut vermischt.

### Ergebnisse

In dem erfindungsgemäßen Versuchsbeispiel 1 war der Split mit einem dunkelgrauen Coating überzogen. Selbst nach dem Waschvorgang und der siebenstündigen Versuchsdauer mit mechanischer Einwirkung löste sich dieses nicht vom Split.

Der durchgeführte Phosphatadsorptionstest zeigte eine beinahe vollkommene Adsorption des zugesetzten Phosphates. Es ergab sich nach 7 Stunden eine Beladungssumme von 23,56 µg Phosphat/g Filtermaterial.

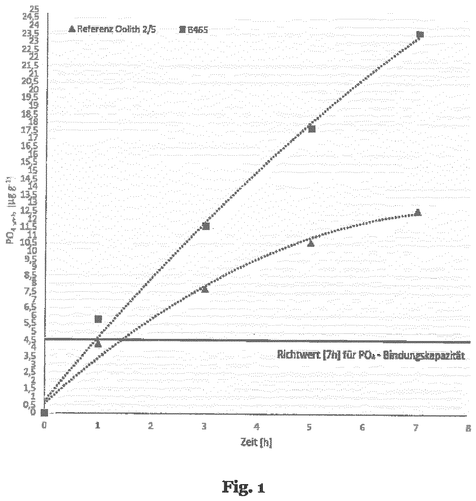

In **Fig. 1** ist die Adoptionskurve des erfindungsgemäßen Versuchsbeispiels 1 (B465) sowie die Adoptionskurve eines Referenzmaterials (natürlicher Oolith-grau mit einer Korngröße von 2-5 mm) dargestellt.

Tabelle 2 zeigt die Phosphatadsorption von Versuchsbeispiel 1 als Wertetabelle.

**Tabelle 2: Phosphatadsorption**

| **Versuchsbeispiel 1 - Phosphatadsorption** | |
|---|---|
| Versuchsdauer | Summe Beladung |
| [h] | [µg/g PO₄ sorbiert] |
| 0. Stunde | 0,00 |
| 1. Stunde | 5,93 |
| 3. Stunde | 11,84 |
| 5. Stunde | 17,75 |
| 7. Stunde | 23,65 |

## Patentansprüche

1. Filtermaterial zur Adsorption von Phosphat, umfassend:
- 50 bis 90 Gew.-% Split mit einer Korngröße von 1 bis 20 mm;
- 1 bis 25 Gew.-% eines oder mehrerer Oxide und/oder Hydroxide von Fe, La und/oder Al;
- 1 bis 12 Gew.-% Zement;
- 0.1 bis 5 Gew.-% Schnellbinder; und
- 1 bis 10 Gew.-% Wasser;
jeweils bezogen auf das Gesamtgewicht des Filtermaterials.

2. Filtermaterial nach Anspruch 1, wobei der Split eine Korngröße von 2 bis 5 mm oder von 5 bis 8 mm aufweist.

3. Filtermaterial nach einem der vorangehenden Ansprüche, wobei der Split eine Trockenrohdichte von 2 bis 3 g/cm³ aufweist.

4. Filtermaterial nach einem der vorangehenden Ansprüche, wobei der Split eine pH-Steigerung im konstanten Durchfluss innerhalb eines geschlossenen Systems nach 20 min von höchstens 1,0 pH-Einheiten aufweist.

5. Filtermaterial nach einem der vorangehenden Ansprüche, wobei der Split eine Abwitterung von höchstens 2 M.-% aufweist.

6. Filtermaterial nach einem der vorangehenden Ansprüche, wobei der Split eine Abriebfestigkeit aufweist, bei der die maximale Differenz nach der Zerreibeprüfung gemäß DIN EN 932-2:19999 und DIN EN 933-1:2012 für eine Körnung von 2 bis 8 mm ≤ 6 Gew.-% beträgt.

7. Filtermaterial nach einem der vorangehenden Ansprüche, wobei das Metalloxid Eisenoxid ist.

8. Filtermaterial nach Anspruch 7, wobei das Eisenoxid eine Korngrößenverteilung d50 von 20 bis 30 µm aufweist.

9. Filtermaterial nach einem der vorangehenden Ansprüche, wobei der Zement Portlandzement ist.

10. Filtermaterial nach einem der vorangehenden Ansprüche, wobei der Schnellbinder Calciumaluminat umfasst.

11. Verfahren zum Herstellen eines Filtermaterials nach einem der vorangehenden Ansprüche, umfassend die Schritte:
a) Bereitstellen eines Gemischs aus dem Metalloxid, dem Zement und dem Schnellbinder;
b) Zugeben des Gemischs aus Schritt a) zu dem Split oder des Splits zu dem Gemisch aus Schritt a);
c) Vermischen des in Schritt b) erhaltenen Gemischs;
d) Zugeben von Wasser zu dem in Schritt c) erhaltenen Gemisch und anschließendes Vermischen.

12. Verfahren nach Anspruch 11, wobei das Vermischen in den Schritten c) und/oder d) in einem Zwangsmischer erfolgt.

13. Bodenfilter, der das Filtermaterial nach einem der Ansprüche 1 bis 10 umfasst.

14. Verwendung des Filtermaterials nach einem der Ansprüche 1 bis 10 zur Adsorption von Phosphat.

15. Verwendung des Bodenfilters nach Anspruch 13 zur Adsorption von Phosphat.

## Claims

1. Filter material for the adsorption of phosphate, comprising:
- 50 to 90 % by weight of grit with a grain size of 1 to 20 mm;
- 1 to 25 % by weight of one or more oxides and/or hydroxides of Fe, La and/or Al;
- 1 to 12 % by weight of cement;
- 0.1 to 5 % by weight of fast-setting binder; and
- 1 to 10 % by weight of water;
in each case in relation to the total weight of the filter material.

2. Filter material according to claim 1, wherein the grit has a grain size of 2 to 5 mm or of 5 to 8 mm.

3. Filter material according to one of the preceding claims, wherein the grit has a dry bulk density of 2 to 3 g/cm³.

4. Filter material according to one of the preceding claims, wherein the grit has a pH-increase in constant flow within a closed system after 20 min of at most 1.0 pH unit.

5. Filter material according to one of the preceding claims, wherein the grit has weathering of at most 2 M %.

6. Filter material according to one of the preceding claims, wherein the grit has an abrasion resistance at which the maximum difference after the pulverisation test according to DIN EN 932-2:19999 and DIN EN 933-1:2012 is ≤ 6 % by weight for a grain size of 2 to 8 mm.

7. Filter material according to one of the preceding claims, wherein the metal oxide is iron oxide.

8. Filter material according to claim 7, wherein the iron oxide has a grain size distribution d50 of 20 to 30 µm.

9. Filter material according to one of the preceding claims, wherein the cement is Portland cement.

10. Filter material according to one of the preceding claims, wherein the fast-setting binder comprises calcium aluminate.

11. Method for producing a filter material according to one of the preceding claims, comprising the steps of:
a) providing a mixture of the metal oxide, the cement and the fast-setting binder;
b) adding the mixture from step a) to the grit or adding the grit to the mixture from step a);
c) mixing the mixture that is obtained in step b);
d) adding water to the mixture obtained in step c) and subsequently mixing it.

12. Method according to claim 11, wherein the mixing in steps c) and/or d) takes place in a compulsory mixer.

13. Soil filter that comprises the filter material according to one of the claims 1 to 10.

14. Use of the filter material according to one of the claims 1 to 10 for the adsorption of phosphate.

15. Use of the soil filter according to claim 13 for the adsorption of phosphate.

## Revendications

1. Matière filtrante destinée à l'adsorption de phosphate, comprenant :
- 50 à 90 % en poids de gravillons ayant une taille de grain de 1 à 20 mm ;
- 1 à 25 % en poids d'un ou de plusieurs oxydes et/ou hydroxydes de Fe, La et/ou Al ;
- 1 à 12 % en poids de ciment ;
- 0,1 à 5 % en poids de liant rapide ; et
- 1 à 10 % en poids d'eau ;
chaque fois par rapport au poids total de la matière filtrante.

2. Matière filtrante selon la revendication 1, dans laquelle les gravillons ont une taille de grain de 2 à 5 mm ou de 5 à 8 mm.

3. Matière filtrante selon l'une quelconque des revendications précédentes, dans laquelle les gravillons ont une masse volumique apparente à sec de 2 à 3 g/cm³.

4. Matière filtrante selon l'une quelconque des revendications précédentes, dans laquelle les gravillons présentent une élévation du pH en écoulement constant à l'intérieur d'un système clos d'au maximum 1,0 unité de pH après 10 min.

5. Matière filtrante selon l'une quelconque des revendications précédentes, dans laquelle les gravillons présentent une dégradation due aux agents atmosphériques d'au maximum 2 % en masse.

6. Matière filtrante selon l'une quelconque des revendications précédentes, dans laquelle les gravillons présentent une résistance à l'abrasion dans laquelle la différence maximale après l'essai de broyage selon DIN EN 932-2:19999 et DIN EN 933-1:2012 est ≤ 6 % en poids pour une granulométrie de 2 à 8 mm.

7. Matière filtrante selon l'une quelconque des revendications précédentes, dans laquelle l'oxyde métallique est l'oxyde de fer.

8. Matière filtrante selon la revendication 7, dans laquelle l'oxyde de fer présente une distribution granulométrique d50 de 20 à 30 µm.

9. Matière filtrante selon l'une quelconque des revendications précédentes, dans laquelle le ciment est du ciment Portland.

10. Matière filtrante selon l'une quelconque des revendications précédentes, dans laquelle le liant rapide est l'aluminate de calcium.

11. Procédé pour la production d'une matière filtrante selon l'une quelconque des revendications précédentes, comprenant les étapes :
a) disposition d'un mélange composé de l'oxyde métallique, du ciment et du liant rapide ;
b) addition du mélange provenant de l'étape a) aux gravillons ou des gravillons au mélange provenant de l'étape a) ;
c) mélangeage du mélange obtenu dans l'étape b) ;
d) addition d'eau au mélange obtenu dans l'étape c) et mélangeage subséquent.

12. Procédé selon la revendication 11, dans lequel le mélangeage dans les étapes c) et/ou d) s'effectue dans un mélangeur à circulation forcée.

13. Filtre de sol, qui comprend la matière filtrante selon l'une quelconque des revendications 1 à 10.

14. Utilisation de la matière filtrante selon l'une quelconque des revendications 1 à 10 pour l'adsorption de phosphate.

15. Utilisation du filtre de sol selon la revendication 13 pour l'adsorption de phosphate.
